Europäisches Patentamt

(19) **European Patent Office**

**Office européen des brevets**

(11) Veröffentlichungsnummer: **0 051 142**
**B1**

(12) # EUROPÄISCHE PATENTSCHRIFT

(45) Veröffentlichungstag der Patentschrift:
25.01.84

(51) Int. Cl.³: **B 01 D 19/00**, B 01 D 3/16 //
**B01J19/24**

(21) Anmeldenummer: **81107451.7**

(22) Anmeldetag: **19.09.81**

(54) **Strömungshilfen für offene beheizte Kastenböden.**

(30) Priorität: **05.11.80 DE 3041632**

(43) Veröffentlichungstag der Anmeldung:
**12.05.82 Patentblatt 82/19**

(45) Bekanntmachung des Hinweises auf die Patenterteilung:
**25.01.84 Patentblatt 84/4**

(84) Benannte Vertragsstaaten:
**DE FR GB NL**

(56) Entgegenhaltungen:
**FR - A - 956 852**
**FR - A - 1 161 127**
**GB - A - 742 284**
**US - A - 2 290 209**

(73) Patentinhaber: **CHEMISCHE WERKE HÜLS AG,**
**Postfach 1320, D-4370 Marl 1 (DE)**

(72) Erfinder: **Möller, Eckhard, Dr., Leverkusener Strasse 29,**
**D-4370 Marl (DE)**
Erfinder: **Bures, Horst-Dieter, Emslandstrasse 1,**
**D-4370 Marl (DE)**
Erfinder: **Magosch, Karl-Heinz, Dr., Leverkusener**
**Strasse 25, D-4370 Marl (DE)**
Erfinder: **Kesper, Bernt, Dr., Barkenberger Allee 164,**
**D-4270 Dorsten 11 (DE)**
Erfinder: **Muschelknautz, Edgar, Prof. Dr.,**
**Carl-Rumpff-Strasse 33, D-5090 Leverkusen 1 (DE)**
Erfinder: **Vogelsgesang, Roland, Dr., Florastrasse 4,**
**D-5090 Leverkusen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Strömungshilfen für offene beheizte Kastenböden

Die Erfindung betrifft Strömungshilfen für offene beheizte Kastenböden in Reaktions- und Entgasungs-Kolonnen für viskose Flüssigkeiten.

Die Erfindung verfolgt den Zweck, ein für die Qualität der viskosen Flüssigkeit günstiges Strömungsbild durch die Zwangsführung der Strömung mittels der Strömungshilfen zu erreichen.

Bei endothermen chemischen Prozessen und bei Ausdampfvorgängen, die auf Kastenböden ablaufen, wird die über die Kastenböden strömende Flüssigkeit beheizt. Die dazu geeignete Heizvorrichtung ist im allgemeinen als ein- oder mehrlagiges Rohrregister ausgeführt, das oberhalb des Kastenbodens liegt und von der Flüssigkeit vollständig umströmt werden soll. Derartige Rohrregister haben an der Unterseite nur einen geringen Abstand vom Kastenboden. Die Flüssigkeitsschicht ist üblicherweise etwa so dick wie das Rohrregister.

Damit das Rohrregister eine grosse Fläche für den Wärmeübergang hat, werden die Rohre relativ dicht gepackt. Solch ein Rohrregister erschwert oder verhindert jedoch bei viskosen oder hochviskosen Flüssigkeiten die Strömung der Flüssigkeit zwischen den Rohren; es lässt die gleichmässige Erwärmung der Flüssigkeit nicht zu und teilt den Flüssigkeitsstrom in zwei Gebiete mit sehr verschiedenen Strömungsformen: Die Strömung zwischen Bodenblech und Rohrregister kann als Couette-Strömung bezeichnet werden, die Strömung oberhalb des Rohrregisters als Strömung im offenen Gerinne.

Der Strömungswiderstand ist bei viskosen Flüssigkeiten in beiden Strömungsgebieten unterschiedlich gross, wodurch auch die mittleren Geschwindigkeiten in diesen beiden Strömungsgebieten sehr unterschiedlich werden. Darüber hinaus hat die Grenzschicht unmittelbar auf dem Bodenblech bei viskosen Flüssigkeiten eine äusserst grosse Verweilzeit im Vergleich zu den höher liegenden Strömungsschichten dieses Strömungsgebietes, weil die Grenzschicht an dem Bodenblech haftet und das Temperaturgefälle zwischen Rohrregister und Bodenblech ungünstig ist.

Damit stellt sich die Aufgabe, viskose und hochviskose Flüssigkeiten auf einem mit einem eingetauchten Rohrregister ausgerüsteten Kastenboden gleichmässig zu beheizen und die Verweilzeitverteilung der Strömungsschichten schmal zu halten.

Die Aufgabe wird erfindungsgemäss gelöst durch

- eine Bodenheizung des Kastenbodens,
- ein auf der Zulaufseite der Flüssigkeit nahe vor dem Rohrregister angebrachtes Siphonblech, dessen Unterkante bis zur Unterseite des Rohrregisters reicht,
- ein Wehr an der Ablaufseite des Kastenbodens, dessen Oberkante bis zur Oberseite des Rohrregisters reicht und dessen Abstand vom Rohrregister grösser ist als der Abstand des zulaufseitigen Siphonbleches vom Rohrregister.

Der Abstand zwischen Siphonblech und der Aussenseite des ersten Rohres in jeder Rohrlage ist bevorzugt etwa so gross wie die Spaltbreite zwischen den Rohren. Der Abstand des im allgemeinen gewinkelten Wehres von der Aussenseite des letzten Rohres in jeder Rohrlage ist bevorzugt etwa zehnmal so gross wie die Spaltbreite zwischen den Rohren. Der Abstand zwischen der Unterseite des Rohrregisters und dem Bodenblech ist bevorzugt etwa fünfmal so gross wie die Spaltbreite zwischen den Rohren.

Die Bodenheizung des Kastenbodens ist in bekannter Weise zweckmässig als Doppelmantelheizung ausgeführt. Sie wird von einem Wärmeträger durchströmt, dessen Temperatur und Durchsatz unabhängig von dem Wärmeträger im Rohrregister-Kreislauf gewählt werden kann.

Die erfindungsgemässe Kombination von Vorrichtungen, die für sich allein genommen teilweise bekannt sind, hat folgende Vorteile:

Die Verweilzeitverteilung der über den Kastenboden strömenden Flüssigkeit ist auch dann schmal, wenn die Flüssigkeit viskos oder hochviskos ist. Damit erreicht man für alle Stromschichten eine konstante Produktqualität, soweit diese von der Temperatur und Verweilzeit abhängig ist. Übermässig grosse Verweilzeiten, die eine Ursache von Qualitätsminderungen der viskosen Flüssigkeit sind, treten nicht auf.

Überraschenderweise ist ein einziges erfindungsgemäss angebrachtes Siphonblech auf der Zulaufseite zusammen mit den anderen Merkmalen der Erfindung hinreichend, um die viskose oder hochviskose Flüssigkeit durch mehrere Lagen des Rohrregisters zu zwingen, auch dann, wenn das Rohrregister in Strömungsrichtung der Flüssigkeit bis zu 1,5 m breit ist. Bereits ein solches Siphonblech verhindert oberhalb des Rohrregisters die Strömung im offenen Gerinne.

Der mit den erfindungsgemässen Vorrichtungen ausgestattete offene Kastenboden erlaubt den freien Austritt von Gasen aus der viskosen Flüssigkeit. Diese Gase können entweder durch Desorption frei werden, oder es handelt sich um gasförmige Reaktionsprodukte einer in der Flüssigkeit ablaufenden Reaktion.

Durch die Bodenheizung wird in der im wesentlichen horizontal strömenden Flüssigkeit zusätzlich eine Konvektionsströmung erzeugt, wodurch die Entstehung von Bereichen mit zu geringer Strömungsgeschwindigkeit (Totwassergebiete) verhindert und die Grenzschicht «wegkonvektiert» wird.

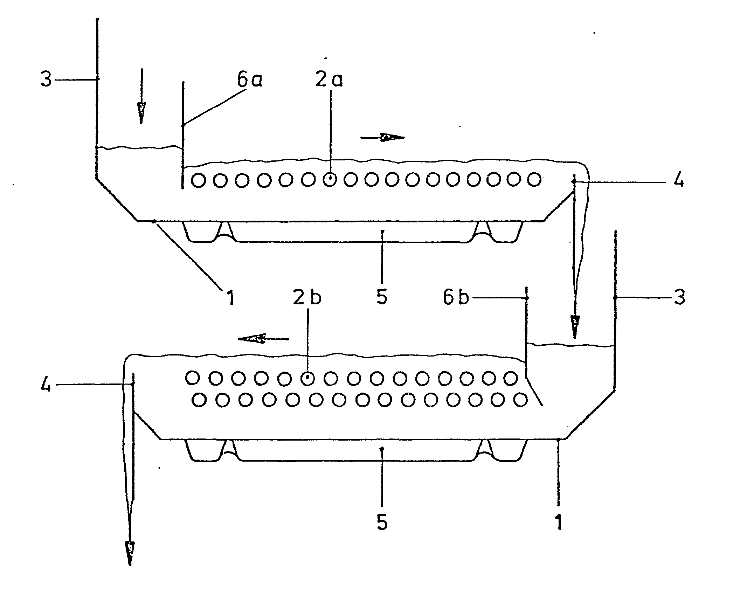

Die erfindungsgemässe Vorrichtung wird in der Abbildung beispielhaft erläutert. Von den innerhalb einer Kolonne vorhandenen mehreren horizontal angeordneten Kastenböden sind zwei Kastenböden (1) gezeichnet, wobei alle für die Erfindung unwesentlichen Einzelheiten weggelassen sind. Ein Kastenboden ist mit einem einlagigen Rohrregister (2a) ausgerüstet, der andere Kastenboden mit einem zweilagigen Rohrregister (2b). Jeder Boden trägt auf der Zulaufseite ein Schutzblech (3) und auf der Ablaufseite ein geknicktes Wehr (4). Unterhalb des Bodens ist die Bodenheizung (5) angebracht. Auf der Zulaufseite ist ein Siphonblech (6) vorhanden, das bei einem einlagigen Rohrregister eben sein kann (6a) und bei einem zweilagigen Rohrregister zweckmässig abgeknickt ist (6b). Die Hauptströmungsrichtung der Flüssigkeit ist durch Pfeile angedeutet.

**Patentansprüche:**

1. Strömungshilfen für beheizte, nach oben offene Kastenböden (1) in Reaktions- und Entgasungskolonnen, auf denen eine viskose oder hochviskose Flüssigkeit fliesst, mit einem von der Flüssigkeit vollständig bedeckten Heizrohrregister (2a, 2b), dessen Abstand vom Boden gering ist, gekennzeichnet durch

– eine Bodenheizung (5) des Kastenbodens,
– ein auf der Zulaufseite der Flüssigkeit nahe vor dem Rohrregister angebrachtes Siphonblech (6a, 6b), dessen Unterkante bis zur Unterseite des Rohrregisters reicht und
– ein Wehr (4) an der Ablaufseite des Kastenbodens, dessen Oberkante bis zur Oberseite des Rohrregisters reicht und dessen Abstand vom Rohrregister grösser ist als der Abstand des zulaufseitigen Siphonbleches vom Rohrregister.

2. Strömungshilfen nach Anspruch 1, gekennzeichnet durch ein Siphonblech (6a, 6b), dessen Abstand von der Aussenseite des ersten Rohres jeder Rohrlage etwa so gross ist wie die Spaltbreite zwischen den Rohren.
3. Strömungshilfen nach Anspruch 1, gekennzeichnet durch ein Wehr (4), das einen Abstand vom Rohrregister hat, der etwa zehnmal so gross ist wie die Spaltbreite zwischen den Rohren.

**Claims**

1. Flow aids for a heated, upwardly open box-type tray (1) in a reaction column or degassing column in which a viscous or highly viscous liquid is flowing, the tray having a register of heating tubes (2a, 2b) which are completely covered by the liquid and whose distance from the tray is small, characterised by tray heating means (5) for the box-type tray, a siphon baffle (6a, 6b) which is fitted on the liquid inlet side just in front of the tube register and whose lower edge extends down to the underside of the tube register, and a weir (4) on the outlet side of the box-type tray, the upper edge of the weir extending up to the top side of the tube register and the distance of the weir from the tube register being greater than the distance of the siphon baffle on the inlet side from the tube register.

2. Flow aids according to claim 1, characterised by a siphon baffle (6a, 6b) whose distance from the outside of the first tube of each tube layer is approximately equal to the gap widths between the tubes.
3. Flow aids according to claim 1, characterised by a weir (4) whose distance from the tube register is about ten times the gap widths between the tubes.

**Revendications**

1. Moyens facilitant l'écoulement pour plateaux en caisson (1) chauffés, ouverts vers le haut, placés dans des colonnes de réaction et de dégazage, sur lesquels s'écoule un liquide visqueux ou très visqueux, comportant un registre de tubes de chauffage (2a, 2b) entièrement recouvert par le liquide et dont la distance au fond est petite, caractérisés par

– un chauffage de fond (5) du plateau en caisson,
– une plaque de siphon (6a, 6b) disposée du côté d'afflux du liquide, juste devant le registre de tubes, et dont le bord inférieur arrive jusqu'au côté inférieur du registre de tubes, et
– un déversoir (4) situé du côté d'évacuation du plateau en caisson, dont le bord supérieur arrive jusqu'au côté supérieur du registre de tubes et dont la distance au registre de tubes est plus grande que la distance entre la plaque de siphon, située du côté de l'arrivée, et le registre du tubes.

2. Moyens facilitant l'écoulement selon la revendication 1, caractérisés par une plaque de siphon (6a, 6b) dont la distance au côté extérieur du premier tube de chaque couche de tubes est à peu près aussi grande que la largeur d'interstice entre les tubes.
3. Moyens facilitant l'écoulement selon la revendication 1, caractérisés par un déversoir (4) dont la distance au registre de tubes est environ dix fois plus grande que la largeur d'interstice entre les tubes.